# EUROPEAN PATENT SPECIFICATION

(11) **EP 1 566 234 B1**
(45) Date of publication and mention of the grant of the patent: **16.01.2008**
(21) Application number: 04003802.8
(22) Date of filing: 19.02.2004
(51) Int. Cl.: B23K 20/12, B21J 15/12, B21J 15/02, F16B 19/00

(54) **Precessing rivet and method for friction stir riveting**
Exzentrische Niete und Verfahren zum Reibrührnieten
Rivet excentrique et procédé de riveter par friction et agitation

(43) Date of publication of application: 24.08.2005
(73) Proprietor: GENERAL MOTORS CORPORATION, Detroit, Michigan 48265-3000 (US)
(72) Inventor: Stevenson, Robin, Bloomfield, Michigan 48304-3611 (US); Wang, Pei-Chung, Troy, Michigan 48098 (US)
(74) Representative: Manitz, Finsterwald & Partner GbR

(56) References cited:
- EP-A- 0 653 265
- US-A1- 2002 125 297
- US-A1- 2003 135 974
- US-A1- 2003 136 810
- US-A1- 2003 192 940

## Description

### TECHNICAL FIELD

This invention relates to friction stir welding and riveting, more particularly, to methods of joining multiple workpieces using a precessing stir rivet to create a mechanical bond, an interweld, and a diffusion bond.

### BACKGROUND OF THE INVENTION

Friction stir welding (FSW) is a method used to join metal workpieces. The method generally uses a cylindrical, shouldered tool with a profiled pin that is rotated at the joint line between two workpieces while being traversed along the joint line. The rotary motion of the tool generates frictional heat which serves to soften and plasticize the workpieces. This softened material, contributed by both workpieces, intermingles and is consolidated by the pin shoulder. As the pin moves laterally the frictional heating is reduced and the softened material hardens, creating a bond between the two workpieces. The best current understanding of the process is that no melting occurs and the weld is left in a fine-grained, hot worked condition with no entrapped oxides or gas porosity.

A common design of FSW stir rods is that the stirring element is substantially symmetrical with some irregularity to induce a stirring motion. Frequently the stir rod has a threaded appearance similar to a bolt. However, to promote intermingling and to retain the plasticized material in the weld zone for as long as possible the direction of rotation of the rod is such that the threads carry the plasticized material downward to create as turbulent a flow and as efficient an intermingling as possible. Particularly for metal workpieces the high thermal conductivity strongly localizes the region, which is plastic enough to be deformed by the stirring action. Thus, the width of the stirred region is substantially equal to the width of the stirring rod.

US 2003/0135974 A1 discloses a rivet and a method of using a rivet in accordance with the preamble of the independent claims.

### SUMMARY OF THE INVENTION

It is the object of the present invention to provide an improved rivet and method for joining fusible workpieces.

This object is achieved through the characterizing features of the independent claims.

This invention is based on a newly developed method which we call friction stir riveting. This method improves friction stir welding by using a stir rod as a rivet. The stir rivet is rotated and advanced into multiple workpieces to plasticize material around the rivet for stir welding the workpieces together. The rivet is then left in place to form a weld between the rivet and the hardened or solidified material.

The present invention provides a modified stir rivet which includes an angled body that is asymmetrical about a rotational axis. The body preferably lies on a centerline that extends outward and downward from the rotational axis so that the body centerline precesses as it rotates on the rotational axis.

The rivet has an upper and lower portion. The upper portion of the rivet includes a cap which serves as the head of the rivet and includes an upper side, an underside, and an outer face. A recessed socket is centrally located along the rotational axis of the upper side of the cap. The underside of the cap is inwardly recessed and joins with an elongated body.

The lower portion of the rivet includes the elongated body having sidewalls and a lower end surface. The body has a cross-section that increases smoothly along the length of the elongated body from the cap down to the lower end, causing the body of the rivet to have re-entrant features. The lower end of the body is bulbous, having a pear like shape. Alternative shapes for the body of the rivet include conical, cylindrical, and spherical shapes. A portion of the sidewall angles inward toward the rotational axis of the rivet, which creates a re-entrant portion along at least one side of the elongated body. The lower portion of the rivet has helical flutes which run the length of the elongated body to redirect displaced material to the lower surface of the rivet.

The cap acts as a retaining element to prevent plasticized material from displacing out of the cavity. Specifically, when the cap comes in contact with the first workpiece the inwardly recessed underside of the cap forces displaced material back into the cavity. As the material re-enters the cavity, helical flutes located on the elongated section of the rivet push material down to the lower surface of the rivet to pack material around the lower end of the rivet.

To rotate the rivet, a rotational apparatus is inserted into the recessed socket of the rivet. The recessed socket is centrally located on the upper surface of the cap and is aligned with the rotational axis of the rivet. The lower portion of the rivet is aligned along the precession axis which runs at an angle to the rotation axis. Offsetting the alignment of the lower portion of the rivet relative to the axis of rotation causes the lower portion of the rivet to move in a precessing motion when rotated.

The precessing motion of the rivet creates more contact around the sidewalls of the rivet and increases stir radius around the rivet. The extra contact between the sidewall and the workpieces to be welded promotes the stir welding process by stirring up a greater area around the rivet. As a result, more plasticized material is intermingled and inter melted. Also, the extra friction created by the precession motion of the rivet creates extra heat to further aid the process.

Scrubbing the sidewalls of the rivet removes oxidation from the rivet which allows a better bond to form between the rivet and the stirred material. If the oxidation is not removed from the sidewalls of the rivet the bond that forms between the rivet and stirred material will be adversely affected by the oxidation layer around the rivet.

Weld strength is further increased by the re-entrant section of the rivet. The elongated body of the rivet creates a re-entrant section along the angled sidewalls of the rivet. The re-entrant section extends from the lower portion of the rivet up to the underside of the cap. This design allows plasticized material to fill in between the cap and the lower surface of the rivet, thereby, increasing the volume of mechanical retention around the re-entrant section of rivet.

The rivet should be formed of a relatively high melting point metal or refractory metal so that the rivet has a higher melting point than the workpieces to be joined. Preferably, the rivet should have a melting point that is at least 37.8° Celsius (100° Fahrenheit) higher and more preferably at least 93.3° Celsius (200° Fahrenheit) higher than workpieces, such as aluminum. Further, the rivet should be formed of a metal of substantially greater hardness than the metal workpieces to be joined. Exemplary metals include high carbon steel, titanium (e.g. titanium 6-4) and the like. Preferably, the rivet should be formed of a metal that is capable of forming a diffusion bond with the metal workpieces to be joined.

A suitable rotational device is used to rotate and press the rivet into the metal workpieces to be joined. The rivet penetrates best when it is rotated at speeds between 4,500 and 27,000 revolutions per minute. The amount of pressure needed to allow the rivet to penetrate the metal workpiece depends upon the speed of rotation. The rate of penetration is increased when the amount of pressure applied is increased, or when the revolutions per minute are increased. Under good conditions, the friction stir rivet can penetrate aluminum at up to 27 millimeters per minute.

These and other features and advantages of the invention will be more fully understood from the following description of certain specific embodiments of the invention taken together with the accompanying drawings.

### BRIEF DESCRIPTION OF THE DRAWINGS

In the drawings:
FIG. 1 is a side view of an exemplary embodiment of a friction stir rivet according to the invention;
FIG. 2 is a side view of the friction stir rivet of FIG. 1 rotated 90°; and
FIG. 3 is a cross-sectional view showing the friction stir rivet of FIG. 1 at the conclusion of rotation during stir riveting of two workpieces together.

### DESCRIPTION OF THE PREFERRED EMBODIMENT

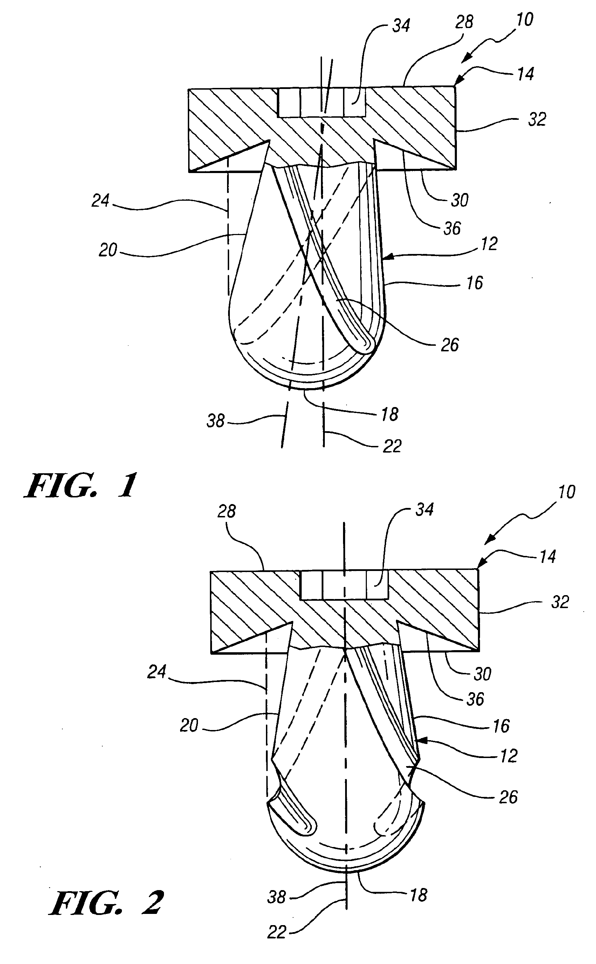

Referring first to FIGS. 1 and 2 of the drawings in detail, numeral 10 generally indicates a friction stir rivet. Rivet 10 includes an elongated stirring body 12 and a cap 14. Elongated body 12 includes a sidewall 16 and a lower end 18. The cross-section of the body 12 increases smoothly from the cap 14 down to the lower end 18, which optionally has a hemispherical shape. Sidewall 16 has an angled portion 20 that slopes inward toward the rotational axis 22 of rivet 10 to create a re-entrant section 24. The elongated body 12 has helical flutes 26.

Cap 14 acts as the head of rivet 10 and includes an upper side 28, an underside 30, and an outer face 32. A recessed socket 34 is centrally located along rotational axis 22 of the upper side 28 of the cap 14. A rotational apparatus engages recessed socket 34 to rotate and drive rivet 10. The underside 30 of the cap 14 has an inwardly recessed portion 36 which joins with the elongated body 12. The body 12 is offset relative to the rotational axis 22 of the rivet and aligned along a precession axis 38 that forms an angle with the rotational axis 22.

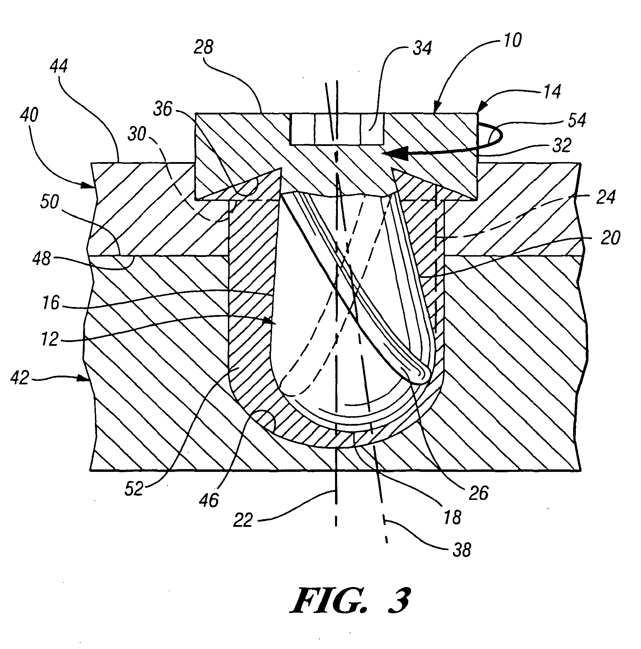

Referring to FIG. 3, the rivet 10 is shown in use for stir riveting a first workpiece 40, such as a fusible aluminum sheet or plate, to a second workpiece 42, such as a fusible aluminum frame or other substrate. In operation, the rivet 10 is rotated around its rotational axis 22 while the elongated body 12, extending along the precession axis 38, rotates with the axis 38 in a precession like motion.

During rotation, downward force is applied to the rivet 10 causing the lower end 18 to frictionally contact an exposed surface 44 of the first workpiece 40. The downward force and rotation of the rivet 10 cause a portion of the first workpiece 40 to plasticize, allowing the rivet 10 to penetrate and create a cavity 46 partially or completely filled with plasticized material 52. As the rivet 10 is driven through an unexposed surface 48 of the first workpiece 40, rivet 10 frictionally contacts an unexposed surface 50 of the second workpiece 42. The downward force and rotation of rivet 10 cause a portion of the second workpiece 42 to plasticize, allowing rivet 10 to continue penetrating cavity 46. As the rivet 10 is driven through the first workpiece 40 into the second workpiece 42, the plasticized material 52 is intermixed.

As rivet 10 is further driven into workpieces 40, 42 the underside 30 of cap 14 contacts exposed surface 44, causing the cap 14 to act as a retaining element restricting plasticized material 52 from escaping during the friction stir riveting process. Specifically, the inwardly recessed portion 36 of underside 30 forces plasticized material 52 into the helical flutes 26. As the rivet is rotated in a clockwise direction as shown by direction arrow 54, the flutes 26 push plasticized material 52 down the length of rivet 10 to the lower end 18, which packs material around the lower end 18 of the rivet 10.

The precession motion of body 12 increases contact between the sidewall 16 of the rivet 10 and the cavity 46. The extra contact created by the sidewall 16 of the rivet 10 promotes the welding process by stirring up a greater area around the rivet 10, causing more plasticized material 52 to be intermingled.

The extra contact between the sidewall 16 and the cavity 46 abrades oxidation from sidewall 16. Removing oxidation around the rivet allows a better bond to form between rivet 10 and the plasticized material 52. If the oxidation is not removed from the sidewall 16 of rivet 10, the oxidation layer will interfere with chemical bonding between rivet 10 and the plasticized material 52.

Preferably, rivet 10 is driven though the first workpiece 40 and partially into the second workpiece 42 until the cap 14 of the rivet 10 is partially recessed into the exposed surface 44 of the first workpiece 40. Thereafter, the rotary motion of rivet 10 is stopped, allowing locally plasticized material 52 to solidify and form several welds. Rivet 10 forms a mechanical bond between the first workpiece 40 and the second workpiece 42. Plasticized material 52 preferably forms a diffusion bond between the rivet 10 and the first and the second workpieces 40, 42. Furthermore, the plasticized material 52 forms an interweld between the first workpiece 40 and the second workpiece 42.

The weld strength is further increased by the re-entrant sections of rivet 10. The elongated body 12 of the rivet 10 creates re-entrant sections around the sidewalls 16, 20 of the rivet 10. Re-entrant section 24 extends from the lower portion 18 of the rivet up to the underside 30 of the cap 14. This design allows plasticized material 52 to fill in between the cap 14 and the lower surface 18 of the rivet 10, thereby, increasing the strength of mechanical retention around the sidewalls 16, 20 of the rivet 10.

The foregoing description is directed, as an example, to joining aluminum metal workpieces with a stir rivet made of metal with a higher temperature melting point. However, it should be understood that other fusible materials may be joined using the same process with a proper selection of compatible materials. Thus, other metals and thermoplastics may also be successfully joined with a stirring rivet and process within the guidelines above described.

While the invention has been described by reference to certain preferred embodiments, it should be understood that numerous changes could be made within the spirit and scope of the inventive concepts described. Accordingly, it is intended that the invention not be limited to the disclosed embodiments, but that it have the full scope permitted by the following claims.

## Claims

1. A friction stir rivet (10) having a cap (14), and an elongated stirring body (12) extending downward from the cap (14), the body (12) including a lower end (18) and sidewalls (16) that join the lower (18) with an underside (30) of the cap (14), wherein;
the rivet (10) has a predetermined rotational axis (22) ;
**characterized in that** the body (12) has a centerline (38) that angles downward and outward from the rotational axis; and
the body (12) has a cross-section that increases smoothly from the cap (14) to the lower end (18) to create a re-entrant area along at least one side (16) of the body (12).

2. A rivet (10) as in claim 1 wherein the body has (12), angled fluting (26) along the sidewalls (16) operative during rotation of the rivet (10) to force flowable material downward toward the lower end (18) of the rivet (10).

3. A rivet (10) as in claim 2 wherein the cap (14) is a disk and the underside (30) is inwardly recessed to direct material inward toward an upper end of the fluting (26).

4. A rivet (10) as in claim 1 including a rotary drive feature (34) on the cap (14).

5. A rivet (10) as in claim 1 wherein the elongated body (12) is pear shaped to create a re-entrant portion around the sidewalls (16).

6. A rivet (10) as in claim 1 wherein the elongated body (12) is asymmetrical relative to the rotational axis (22).

7. A rivet (10) as in claim 1 wherein the lower end (18) of the body (12) is generally hemispherical.

8. A method of using a rivet (10) to join fusible workpieces at a point of engagement, comprising the steps of;
providing a rivet (10) with a cap and an elongated body (12) formed of a material with a substantially higher melting point than that of the workpieces;
rotating the rivet (10) about a rotational axis (22) and simultaneously driving the precessing body (12), through a first workpiece (40) and into an engaged second workpiece (42), thereby creating friction between the rivet (10) and the workpieces (40, 42), that locally plasticizes an enlarged volume of material around the rivet (10) ;
stopping further rotation and inward driving of the rivet (10) after a desired depth is reached; and
cooling the workpieces (40, 42), and the rivet (10), until solidification of plasticized material occurs and the fusible workpieces are held together by the hardened or solidified material and by the rivet (10) retained within the workpieces (40, 42) at the point of engagement **characterized in that**,
the body (12) has a centerline (38) that angles downward and outward from the rotational axis (22) so that the body angles outward from the rotational axis (22), which causes the body to rotate in a procession-like motion and the body has a cross-section that increases smoothly from the cap to the lower end.

9. A method as in claim 8 including forming the rivet (10) of a material compatible with that of the fusible workpieces (40,42) such that during cooling of the plasticized material surrounding the rivet (10) a diffusion bond is created between the rivet (10) and the surrounding material.

10. A method as in claim 8 wherein the cooling step causes interwelding of the fusible workpieces (40, 42).

11. A method as in claim 8 wherein the cooling step embeds the rivet (10) to form a mechanical bond between the joined workpieces (40,42).

12. A method as in claim 8 wherein the fusible workpieces (40, 42) are metal.

13. A method as in claim 8 including providing a cap (14) on the body (12) with a recessed underside adjacent the body (12) to force displaced material back into a stir area around the rivet (10).

14. A method as in claim 8 including providing angled fluting (26) around sidewalls (16), of the body (12) to direct displaced material down toward an end of the rivet (10).

15. A method as in claim 8 wherein the body (12) of the rivet (10) is asymmetrical relative to the rotational axis (22).

## Patentansprüche

1. Rührreibniet (10) mit einer Kappe (14) und einem länglichen Rührkörper (12), der sich von der Kappe (14) nach unten erstreckt, wobei der Körper (12) ein unteres Ende (18) und Seitenwände (16) aufweist, die das untere Ende (18) mit einer Unterseite (30) der Kappe (14) verbinden, wobei:
der Niet (10) eine vorbestimmte Rotationsachse (22) besitzt;
**dadurch gekennzeichnet, dass**
der Körper (12) eine Mittellinie (38) aufweist, die nach unten und auswärts von der Rotationsachse angewinkelt ist; und
der Körper (12) einen Querschnitt besitzt, der von der Kappe (14) zu dem unteren Ende (18) glatt zunimmt, um einen Wiedereintrittsbereich entlang zumindest einer Seite (16) des Körpers (12) zu erzeugen.

2. Niet (10) nach Anspruch 1, wobei der Körper (12) eine angewinkelte Kehle (26) entlang der Seitenwände (16) besitzt, die während der Rotation des Niets (10) dazu dient, fließbares Material nach unten in Richtung dem unteren Ende (18) des Niets (10) zu treiben.

3. Niet (10) nach Anspruch 2, wobei die Kappe (14) eine Scheibe ist und die Unterseite (30) einwärts ausgenommen ist, um Material einwärts in Richtung einem oberen Ende der Kehle (26) zu lenken.

4. Niet (10) nach Anspruch 1, mit einem Rotationsantriebsmerkmal (34) an der Kappe (14).

5. Niet (10) nach Anspruch 1, wobei der längliche Körper (12) birnenförmig ist, um einen Wiedereintrittsabschnitt um die Seitenwände (16) herum zu erzeugen.

6. Niet (10) nach Anspruch 1, wobei der längliche Körper (12) relativ zu der Rotationsachse (22) asymmetrisch ist.

7. Niet (10) nach Anspruch 1, wobei das untere Ende (18) des Körpers (12) allgemein halbkugelförmig ist.

8. Verfahren zur Verwendung eines Niets (10), um schmelzbare Werkstücke an einem Eingriffspunkt zu verbinden, mit den Schritten, dass:
ein Niet (10) mit einer Kappe und einem länglichen Körper (12) vorgesehen wird, der aus einem Material ausgebildet wird, das einen Schmelzpunkt aufweist, der wesentlich höher als der der Werkstücke ist;
der Niet (10) um eine Rotationsachse (22) rotiert wird und gleichzeitig der präzidierende Körper (12) durch ein erstes Werkstück (40) und in ein in Eingriff stehendes zweites Werkstück (42) getrieben wird, wodurch eine Reibung zwischen dem Niet (10) und den Werkstücken (40, 42) erzeugt wird, die ein vergrößertes Materialvolumen um den Niet (10) herum lokal erweicht;
eine weitere Rotation und ein weiteres Einwärtstreiben des Niets (10), nachdem eine gewünschte Tiefe erreicht ist, gestoppt wird; und
die Werkstücke (40, 42) und der Niet (10) gekühlt werden, bis eine Verfestigung des erweichten Materials auftritt und die schmelzbaren Werkstücke durch das erhärtete oder verfestigte Material und durch den Niet (10), der in den Werkstücken (40, 42) gehalten ist, an dem Eingriffspunkt zusammengehalten werden,
**dadurch gekennzeichnet, dass**
der Körper (12) eine Mittellinie (38) besitzt, die nach unten und auswärts von der Rotationsachse (22) angewinkelt ist, so dass der Körper von der Rotationsachse (22) nach außen angewinkelt ist, was zur Folge hat, dass der Körper in einer präzessionsartigen Bewegung rotiert, und der Körper einen Querschnitt besitzt, der von der Kappe glatt in das unteren Ende übergeht.

9. Verfahren nach Anspruch 8, ferner umfassend, dass der Niet (10) aus einem Material geformt wird, das mit demjenigen der schmelzbaren Werkstücke (40, 42) kompatibel ist, so dass während des Kühlens des erweichten Materials, das den Niet (10) umgibt, eine Diffusionsbindung zwischen dem Niet (10) und dem umgebenden Material erzeugt wird.

10. Verfahren nach Anspruch 8, wobei der Kühlschritt bewirkt, dass die schmelzbaren Werkstücke (40, 42) miteinander verschweißt werden.

11. Verfahren nach Anspruch 8, wobei der Kühlschritt den Niet (10) einbettet, um eine mechanische Bindung zwischen den verbundenen Werkstücken (40, 42) zu bilden.

12. Verfahren nach Anspruch 8, wobei die schmelzbaren Werkstücke (40, 42) Metall sind.

13. Verfahren nach Anspruch 8, ferner umfassend, dass eine Kappe (14) an dem Körper (12) mit einer ausgenommenen Unterseite benachbart des Körpers (12) vorgesehen wird, um verdrängtes Material zurück in einen Rührbereich um den Niet (10) zu treiben.

14. Verfahren nach Anspruch 8, ferner umfassend, dass eine angewinkelte Kehle (26) um Seitenwände (16) des Körpers (12) vorgesehen wird, um verdrängtes Material nach unten in Richtung dem Ende des Niets (10) zu lenken.

15. Verfahren nach Anspruch 8, wobei der Körper (12) des Niets (10) relativ zu der Rotationsachse (22) asymmetrisch ist.

## Revendications

1. Rivet de friction-malaxage (10) ayant un chapeau (14) et un corps de malaxage allongé (12) s'étendant vers le bas à partir du chapeau (14), le corps (12) incluant une extrémité inférieure (18) et des parois latérales (16) qui joignent l'extrémité inférieure (18) à une partie inférieure (30) du chapeau (14), dans lequel :
le rivet (10) a un axe de rotation prédéterminé (22) ;
**caractérisé en ce que** le corps (12) a une ligne centrale (38) qui s'incline vers le bas et vers l'extérieur à partir de l'axe de rotation ; et
le corps (12) a une section transversale qui augmente régulièrement à partir du chapeau (14) vers l'extrémité inférieure (18), afin de créer une zone ré-entrante le long d'au moins un côté (16) du corps (12).

2. Rivet (10) selon la revendication 1, dans lequel le corps (12) a des cannelures inclinées (26) le long des parois latérales (16), opérationnelles lors de la rotation du rivet (10) pour pousser le matériau liquide vers le bas, vers l'extrémité inférieure (18) du rivet (10).

3. Rivet (10) selon la revendication 2, dans lequel le chapeau (14) est un disque, et le côté inférieur (30) est évidé vers l'intérieur pour diriger le matériau vers l'intérieur, vers une extrémité supérieure des cannelures (26).

4. Rivet (10) selon la revendication 1, comprenant une caractéristique d'entraînement rotatif (34) sur le chapeau (14).

5. Rivet (10) selon la revendication 1, dans lequel le corps allongé (12) est en forme de poire pour créer une partie ré-entrante autour des parois latérales (16).

6. Rivet (10) selon la revendication 1, dans lequel le corps allongé (12) est asymétrique par rapport à l'axe de rotation (22).

7. Rivet (10) selon la revendication 1, dans lequel l'extrémité inférieure (18) du corps (12) est généralement hémisphérique.

8. Procédé d'utilisation d'un rivet (10) pour joindre des pièces fusibles en un point de mise en prise, comprenant les étapes consistant à :
fournir un rivet (10) avec un chapeau et un corps allongé (12) formé d'un matériau ayant un point de fusion sensiblement supérieur à celui des pièces ;
faire tourner le rivet (10) autour d'un axe de rotation (22) et entraîner simultanément le corps de précession (12) à travers une première pièce (40) et dans une deuxième pièce en prise (42), ce qui crée une friction entre le rivet (10) et les pièces (40, 42), qui plastifie localement un volume agrandi de matériau autour du rivet (10) ;
arrêter la rotation supplémentaire et l'entraînement vers l'intérieur du rivet (10) après avoir atteint une profondeur souhaitée ; et
refroidir les pièces (40, 42) et du rivet (10), jusqu'à la solidification du matériau plastifié et jusqu'à ce que les pièces fusibles soient maintenues ensemble grâce au matériau durci ou solidifié, et grâce au rivet (10) retenu à l'intérieur des pièces (40, 42) au niveau du point de mise en prise **caractérisé en ce que**,
le corps (12) a une ligne centrale (38) qui s'incline vers le bas et vers l'extérieur à partir de l'axe de rotation (22), de telle sorte que le corps s'incline vers l'extérieur à partir de l'axe de rotation (22), ce qui pousse le corps à tourner selon un mouvement de type précession, et le corps a une section transversale qui augmente régulièrement à partir du chapeau vers l'extrémité inférieure.

9. Procédé selon la revendication 8, comprenant une étape consistant à former le rivet (10) d'un matériau compatible avec celui des pièces fusibles (40, 42), de telle sorte que, lors du refroidissement du matériau plastifié entourant le rivet (10), une liaison de diffusion est créée entre le rivet (10) et le matériau avoisinant.

10. Procédé selon la revendication 8, dans lequel l'étape consistant à refroidir à pour conséquence un intersoudage des pièces fusibles (40, 42).

11. Procédé selon la revendication 8, dans lequel l'étape consistant à refroidir englobe le rivet (10) pour former une liaison mécanique entre les pièces jointes (40, 42).

12. Procédé selon la revendication 8, dans lequel les pièces fusibles (40, 42) sont en métal.

13. Procédé selon la revendication 8, incluant comprenant l'étape consistant à fournir un chapeau (14) sur le corps (12), un côté inférieur évidé étant proche du corps (12) pour pousser le matériau déplacé à nouveau dans une zone de malaxage autour du rivet (10).

14. Procédé selon la revendication 8, comprenant l'étape consistant à fournir des cannelures inclinées (26) autour des parois latérales (16) du corps (12), pour diriger le matériau déplacé vers le bas, vers une extrémité du rivet (10).

15. Procédé selon la revendication 8, dans lequel le corps (12) du rivet (10) est asymétrique par rapport à l'axe de rotation (22).
